Europäisches Patentamt

European Patent Office

Office européen des brevets

(19)

(11) Veröffentlichungsnummer : **0 284 835 B1**

# (12) EUROPÄISCHE PATENTSCHRIFT

(45) Veröffentlichungstag der Patentschrift :
28.08.91 Patentblatt 91/35

(51) Int. Cl.⁵ : **B65G 47/24, A21C 9/08, A23G 7/00**

(21) Anmeldenummer : 88103575.2

(22) Anmeldetag : 08.03.88

(54) Verfahren und Vorrichtung zum Ausrichten von Süsswaren.

(30) Priorität : 19.03.87 DE 3708881

(43) Veröffentlichungstag der Anmeldung :
05.10.88 Patentblatt 88/40

(45) Bekanntmachung des Hinweises auf die
Patenterteilung :
28.08.91 Patentblatt 91/35

(84) Benannte Vertragsstaaten :
CH FR GB IT LI NL

(56) Entgegenhaltungen :
AT-B- 317 808
CH-A- 569 643
CH-A- 621 529

(73) Patentinhaber : Otto Hänsel GmbH
Lister Damm 19
W-3000 Hannover (DE)

(72) Erfinder : Hogenkamp,Wilhelm
Liebigstrasse 4
W-3000 Hannover (DE)

(74) Vertreter : Rehberg, Elmar, Dipl.-Ing.
Postfach 3162 Am Kirschberge 22
W-3400 Göttingen (DE)

EP 0 284 835 B1

## Beschreibung

Die Erfindung betrifft ein Verfahren und eine Vorrichtung zum Ausrichten von in unregelmäßigen Abständen zulaufenden Süßwarenstücken, wie z. B. von Schokoladetafeln oder -riegeln, auf einem Förderband. Süßwarenstücke, wie beispielsweise Schokoladetafeln oder -riegel, gelangen beim Ausformen üblicherweise auf ein Förderband und bilden dort aufeinanderfolgende Reihen. Diese Reihen weisen jedoch unterschiedliche Abstände voneinander auf, wobei zusätzlich die Stücke in einer Reihe gegeneinander versetzt sind. Für die Weiterverarbeitung ist es jedoch erforderlich, daß diese Reihen genau ausgerichtet werden.

Aus der CH-A-569643 ist eine Maschine zum Ausrichten von in unregelmäßigen Abständen zulaufenden Süßwarenstücken, wie z.B. von Schokoladetafeln, bekannt, die gleichzeitig auch dazu dient, die Abstände zwischen den Reihen der ausgerichteten Süßwarenstücke in regelmäßiger Weise zu vergrößern. Hierzu werden drei hintereinandergeschaltete Förderbänder eingesetzt, die jeweils mit konstanten Geschwindigkeiten angetrieben werden. Die verschiedenen Geschwindigkeiten der Förderbänder sind in Förderrichtung schrittweise gesteigert gewählt. Die in unregelmäßigen Abständen zulaufenden Süßwarenstücke werden zunächst von dem ersten auf ein zweites Förderband übergeben, wodurch die Reihen einschließlich des Versatzes in den Reihen auseinandergezogen werden. Mit diesem zweiten Förderband arbeitet eine Vorrichtung zusammen, die oberhalb des zweiten Förderbands angeordnet ist und um zwei parallel und im Abstand zum zweiten Förderband angeordnete Achsen derart umläuft, daß die Bewegungsrichtung des zweiten Förderbands parallel um ein gewisses Stück überstrichen wird. Diese Vorrichtung besitzt eine Mehrzahl von Querstäben, die um die beiden Achsen umlaufend vorgesehen sind und von einer angehobenen Stellung in eine abgesenkte Stellung absenkbar sind, in welcher die Querstäbe in die Anfangslücken zwischen den aufeinanderfolgenden Süßwarenreihen abgesenkt werden. Die Einrichtung und damit die Querstäbe werden mit variabler Geschwindigkeit angetrieben, wobei für jede Süßwarenreihe eine Beschleunigung und eine anschließende Verzögerung erforderlich sind. Das Ausrichten der Süßwarenstücke in der Reihe und die Erzeugung des vorgesehenen Abstands zwischen den Reihen erfolgt durch Beschleunigung der Süßwarenstücke auf dem bzw. gegenüber dem mittleren Förderband. Die Leistung einer solchen Maschine ist durch das immer wieder erforderliche Beschleunigen und Verzögern der mit dem mittleren Förderband zusammenarbeitenden Einrichtung begrenzt. Durch das Zusammenwirken der beiden ersten Förderbänder wird in nachteiliger Weise auch der Versatz in der Reihe vergrößert, der im Bereich des zweiten Förderbands dann durch das Einwirken der oberhalb angeordneten Vorrichtung wieder beseitigt werden muß. Insoweit müssen die Süßwarenstücke unter Reibung auf dem zweiten Förderer nicht nur um das für den normalen Versatz erforderliche Maß, sondern entsprechend dem vergrößerten Versatz, beschleunigt werden. Die oberhalb des mittleren Förderbands arbeitende Vorrichtung ist um zwei abständig angeordnete Achsen umlaufend ausgebildet und weist Ketten und andere Teile auf, deren Massen ebenfalls verzögert und beschleunigt werden müssen.

Es ist weiterhin bekannt, die Süßwarenreihen gegen einen festen Anschlag laufen zu lassen, so daß sich die Reihen ausrichten können, wonach der Querstab kurzzeitig angehoben wird, so daß die ausgerichtete Reihe weiter befördert werden kann. Die Leistung ist hierbei beschränkt, da die Süßwarenteile gegen einen feststehenden Querstab stoßen und zum Stillstand gelangen und im Anschluß daran aus dem Stillstand beschleunigt werden müssen. Die Fördergeschwindigkeit des Förderers kann nicht beliebig erhöht werden, da die Süßwaren beim Anstoßen an den Querstab keinen Schaden nehmen sollen und beim nachfolgenden Beschleunigen nicht verrutschen dürfen, was das Ausrichten zunichtemachen würde.

Der Erfindung liegt die Aufgabe zugrunde, ein Verfahren und eine Vorrichtung der eingangs beschriebenen Art derart weiterzubilden, daß der Versatz der in unregelmäßigen Abständen zulaufenden Süßwarenstücke in der Reihe beseitigt wird. Dies soll einfach, kostengünstig und mit hoher Leistung möglich sein.

Dies wird bei einem Verfahren mit den im Anspruch 1 angegebenen Merkmalen erreicht sowie mit einer Vorrichtung, die die im Anspruch 4 angegebenen Merkmale aufweist. Das neue Verfahren arbeitet mit Verzögerung der Süßwarenstücke auf dem Förderband, d.h. die Süßwarenstücke werden nicht mehr beschleunigt, sondern auf dem Förderband abgebremst. Die Querstäbe brauchen nur solange mit verzögerter Geschwindigkeit in Förderrichtung des Förderbands an den Süßwarenstücken anliegend mitgeführt werden, bis der gegenseitige Versatz der Süßwarenstücke in der Reihe beseitigt ist. Dabei kann ggf. auch gleichzeitig der vorgesehene Abstand zwischen den Süßwarenreihen erreicht werden. Der Querstab wird jeweils individuell in die Anfangslücke eingeführt und nach Bildung der vorgesehenen Lücke beschleunigt aus dieser herausgeführt. Zu diesem Zweck ist es nicht mehr erforderlich, die gesamte Einrichtung, die mit dem Förderband zusammenarbeitet, reihenweise zu beschleunigen oder zu verzögern. Die Einrichtung kann vielmehr mit konstanter Geschwindigkeit umlaufend betrieben werden. Da diese Geschwindigkeit geringer ist als die Geschwindigkeit des Förderbands und auch vergleichsweise geringe Massen nur beschleunigt und verzögert werden müssen, ist eine Erhöhung der Leistung die Folge. Der Stoß beim Auftreffen der Süßwarenstücke auf den Querstab ist gering und eine Beschädigung der Süßwarenstücke tritt in der Regel nicht ein. Mit einer solchen Einrichtung kann eine Leistung von etwa 150 Reihen/min leicht erreicht werden.

Vorzugsweise wird der Abstand der Süßwarenstücke im Bereich der Anfangslücke und der Versatz der Süßwarenstücke in je einer Reihe gemessen und das Absenken und Mitführen des Querstabs erfolgt in Abhängigkeit von diesen Meßwerten. Eine solche Steuerung ist außerordentlich flexibel und es lassen sich Störungen im Betrieb vermeiden, da, falls beispielsweise der Abstand zwischen zwei Reihen zu gering ist, um einen Querstab abzusenken, dieser angehoben bleiben kann und die beiden Süßwarenreihen ausgesondert werden können, ohne daß etwa Stillstandszeiten entstehen.

Selbstverständlich ist es zweckmäßig, mehrere Querstäbe nacheinander individuell in aufeinanderfolgende Anfangslücken einzubringen, wobei es jedoch nicht erforderlich ist, daß diese Querstäbe auch zeitlich überlappend mit den Süßwarenreihen in Wirkverbindung treten. Besonders sinnvoll ist deshalb eine mit dem Förderband zusammenarbeitende Einrichtung, bei der der oder die Querstäbe nur um eine einzige horizontale Achse drehbar angeordnet sind. Diese Einrichtung kann Drehteller aufweisen, an der jeweils mehrere Halterungen vorgesehen sind, die mit jeweils einem Querstab ausgestattet sind.

Eine Ausführungsform der Erfindung wird im Folgenden anhand der beiliegenden Zeichnungen näher erläutert. Dabei zeigen :

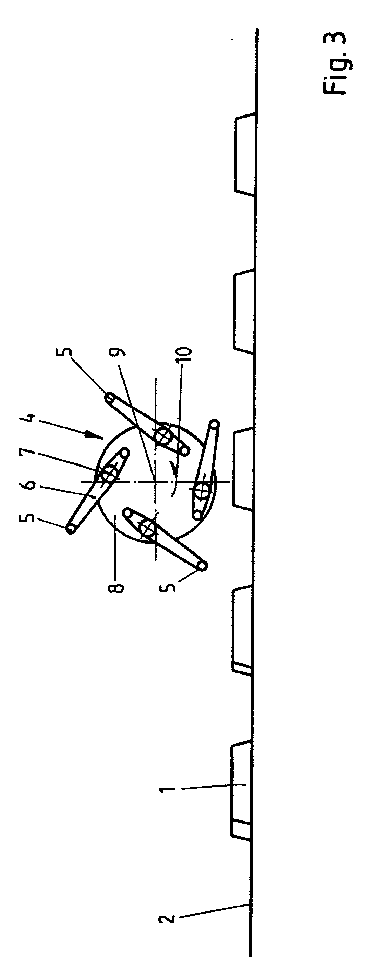

Figuren 1 bis 3     schematische Seitenansichten der Ausrichtvorrichtung in unterschiedlichen Arbeitsstellungen,

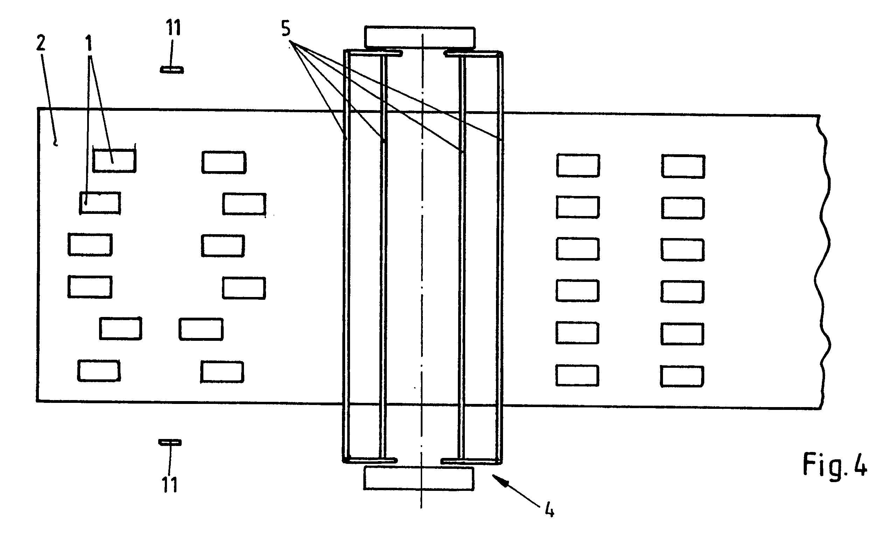

Figur 4     eine schematische Draufsicht auf die Ausrichtvorrichtung.

Süßwarenstücke, beispielsweise Schokoladetafeln 1, gelangen aus einer nicht weiter dargestellten Produktionsmaschine auf ein Förderband 2. Die Tafeln 1 liegen dabei in einer Reihe nebeneinander, wobei die einzelnen Tafeln jedoch völlig unregelmäßig gegenüber den benachbarten Tafeln vor- oder zurückversetzt sein können. Dieser Versatz ist in den Zeichnungen mit Y bezeichnet. Das Förderband 2 bewegt sich in die Richtung des Pfeiles 3.

Über dem Förderband 2 ist die Ausrichtvorrichtung 4 angeordnet. Sie ist mit Querstäben 5 ausgerüstet, welche sich über die gesamte Breite des Förderbandes 2 hinwegerstrecken und als Anschlag für die auszurichtenden Schokoladetafelreihen dienen. An einem gemeinsamen Drehteller 8, dessen Drehachse 9 horizontal und parallel zu den Querstäben 5 verläuft, sind dabei mehrere Halterungen 6 für die Querstäbe 5 vorgesehen. Die Halterungen 6 sind aus Hebeln gebildet, welche um etwa horizontale Achsen 7 verschwenkbar an dem Drehteller 8 gelagert sind. Der Drehteller 8 dreht sich in Richtung des Pfeiles 10. Zweckmäßigerweise ist an den beiden Enden der Querstäbe 5 jeweils ein solcher Drehteller 8 mit den Halterungen 6 vorgesehen.

Zum Antrieb der Einrichtung lassen sich herkömmliche Motoren und Getriebe verwenden, die keiner weiteren Erläuterung bedürfen. Zur Steuerung der Einrichtung ist am Beginn des Förderbandes eine Fotozelle 11 vorgesehen, mit deren Hilfe die einzelnen Tafelreihen erkannt und zugleich der Abstand Z zwischen ihnen ermittelt werden kann.

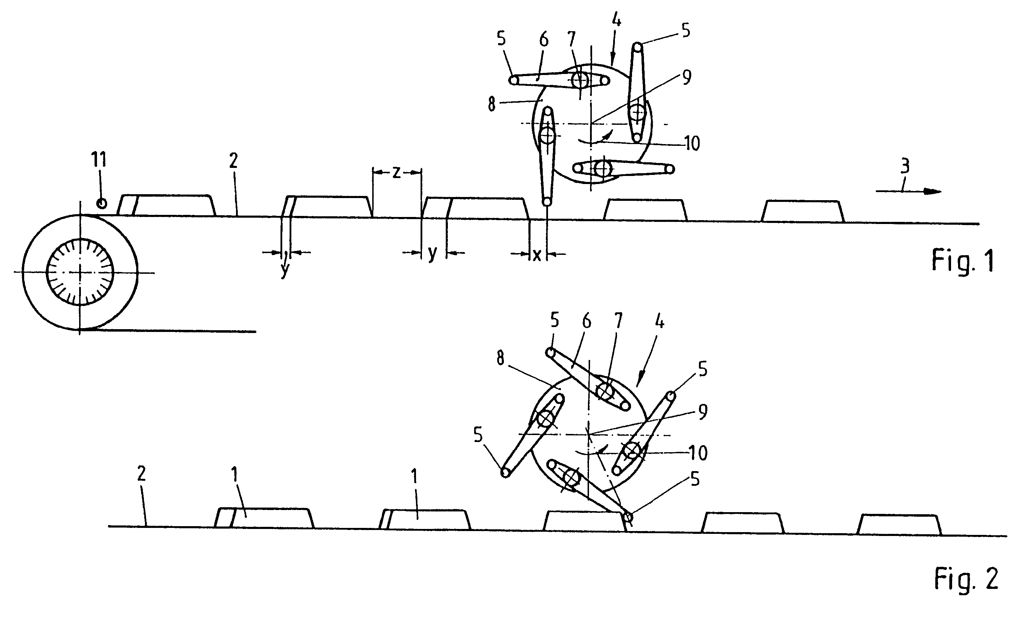

Die Arbeitsweise der Vorrichtung wird im Folgenden im einzelnen erläutert. Wie schon eingangs erläutert, gelangen die in sich. unregelmäßigen Schokoladetafelreihen auf das Förderband 2. Sie laufen dabei an der Fotozelle 11 vorbei, mit deren Hilfe die Reihen sowie deren Abstände voneinander erkannt werden können. In Abhängigkeit von den erhaltenen Meßwerten wird ein Querstab 5 so gesteuert, daß er in einem Abstand X vor einer Tafelreihe abgesenkt wird. Er wird dabei durch den rotierenden Drehteller 8 in Richtung des Pfeiles 3 weiterbewegt. Diese Bewegung erfolgt jedoch gegenüber der des Förderbandes verzögert, so daß die Schokoladetafeln gegen den Querstab 5 auftreffen, so daß der Versatz Y ausgeglichen wird. Die Tafelreihe gelangt dabei in die Position gemäß Fig. 2, in welcher sie sich etwa unter der Ausrichtvorrichtung 4 befindet. Sobald der Abstand zu der davor verarbeiteten Tafelreihe einen vorbestimmten Wert erreicht hat, was gegebenenfalls mit einer weiteren Fotozelle ermittelt werden kann, wird die Halterung 6 mit dem Querstab 5 um die Achse 7 nach oben geschwenkt, so daß die Tafelreihe freiliegend ist. Sie ist dann ausgerichtet und kann der weiteren Verarbeitung zugeführt werden. Dieser Vorgang kann sich daraufhin mit der nächsten Tafelreihe und mit dem nächsten Querstab wiederholen. Sollte es vorkommen, daß zwei Reihen einen Zwischenraum aufweisen, welcher zu gering ist um einen Querstab einzuführen, so wird dies von der Fotozelle 11 erkannt und die entsprechende Halterung 6 mit dem zugehörigen Querstab nicht abgesenkt, so daß der Stab über den Tafeln hinweggeführt wird. Eine solche Tafelreihe kann dann später ausgesondert werden.

Mit dieser Vorrichtung lassen sich außerordentlich hohe Leistungen erzielen, da die Tafeln nicht bis zum Stillstand abgebremst und danach erneut beschleunigt werden müssen, wie es bei Einrichtungen der Fall ist, welche mit einer gegenüber dem Förderband feststehenden Anschlagschiene arbeiten. Außerdem läßt sich mit ihrer Hilfe auch der Abstand der ausgerichteten Schokoladetafelreihen voneinander auf einen vorherbestimmten Wert bringen.

Die Vorrichtung läßt sich in verschiedenster Weise abwandeln und den jeweiligen Erfordernissen anpassen. Beispielsweise können statt der in den Zeichnungen dargestellten vier Querstäbe mehr oder weniger vorgesehen sein. Die Ansteuerung der Halterungen 6 beim Verschwenken um die Achsen 7 erfolgt dabei zweckmäßigerweise elektromagnetisch, so daß sie sich zu verschiedenen Zeitpunkten absenken bzw. anheben lassen. Eine besondere Steuerung der Geschwindigkeit des Förderbandes ist dabei nicht erforderlich.

## Patentansprüche

1. Verfahren zum Ausrichten von in unregelmäßigen Abständen zulaufenden Süßwarenstücken (1), wie z.B. von Schokoladetafeln oder -riegeln, auf einem Förderband (2), indem Querstäbe (5) mit gegenüber der Geschwindigkeit des Förderbands verzögerter Geschwindigkeit in Förderrichtung (3) des Förderbands (2) mitgeführt werden, je ein Querstab (5) in die Anfangslücke (Z) zwischen zwei aufeinanderfolgenden Reihen von Süßwarenstücken individuell eingebracht und nur solange mit verzögerter Geschwindigkeit in Förderrichtung des Förderbands (2) mitgeführt wird, bis dabei der gegenseitige Versatz (Y) der Süßwarenstücke (1) in der Reihe beseitigt ist, und jeder Querstab (5) gegenüber dem Förderband (2) beschleunigt und danach angehoben und an einen Ausgangspunkt zurückgeführt wird.

2. Verfahren nach Anspruch 1, dadurch gekennzeichnet, daß der Abstand der Süßwarenstücke (1) im Bereich der Anfangslücke (Z) und der Versatz (Y) der Süßwarenstücke in je einer Reihe gemessen werden, und daß das Absenken und Mitführen des Querstabs (5) in Abhängigkeit von diesen Meßwerten erfolgt.

3. Verfahren nach Anspruch 1 und 2, dadurch gekennzeichnet, daß mehrere Querstäbe (5) nacheinander individuell in aufeinanderfolgende Anfangslücken (Z) eingebracht werden.

4. Vorrichtung zum Ausrichten von in unregelmäßigen Abständen zulaufenden Süßwarenstücken (1), wie z.B. von Schokoladetafeln oder -riegeln, mit einem von oberhalb eines Förderbands (2) in eine Anfangslücke (Z) einführbaren Querstab (5), der in Förderrichtung des Förderbands (2) horizontal verschiebbar geführt ist und an einer auf- und abschwenkbaren Halterung (6) sitzt, dadurch gekennzeichnet, daß die Halterung (6) zusammen mit dem Querstab (5) an einer um eine horizontale Achse (9) drehbaren Einrichtung (8) angeordnet ist.

5. Vorrichtung nach Anspruch 4, dadurch gekennzeichnet, daß die drehbare Einrichtung Drehteller (8) aufweist.

6. Vorrichtung nach Anspruch 4 und 5, dadurch gekennzeichnet, daß an der Einrichtung (8) mehrere Halterungen mit den jeweils zugehörigen Querstäben (5) angeordnet sind.

7. Vorrichtung nach Anspruch 4 bis 6, dadurch gekennzeichnet, daß am Förderband (2) Fotozellen (11) zum Erfassen der Anfangslücken (Z) aufeinanderfolgender Süßwarenreihen (1) und des Versatzes (Y) in der Reihe vorgesehen sind.

8. Vorrichtung nach Anspruch 4 bis 7, dadurch gekennzeichnet, daß zum Auf- und Abschwenken der Halterungen (6) mit den Querstäben (5) elektromechanische Vorrichtungen vorgesehen sind.

9. Vorrichtung nach Anspruch 4 bis 8, dadurch gekennzeichnet, daß zur Ansteuerung der elektromechanischen Vorrichtungen in Verbindung mit den Fotozellen (11) ein Rechner vorgesehen ist.

## Claims

1. Method for the orientation of confectionery (1), such as for example blocks or bars of chocolate, coming forward at irregular spacings on a conveyor belt (2) in that transverse rods (5) are carried along in conveying direction (3) of the conveyor belt (2) at a speed retarded relative to the speed of the conveyor belt, a respective transverse rod (5) is introduced individually into the initial gap (Z) between each two successive rows of confectionery pieces and carried along in conveying direction of the conveyor belt (2) at retarded speed only until the mutual displacement (Y) of the confectionery pieces (1) in the row is then eliminated and each transverse rod (5) is accelerated relative to the conveyor belt (2), thereafter raised and returned to a starting point.

2. Method according to claim 1, characterised thereby, that the spacing of the confectionery pieces (1) in the region of the initial gap (Z) and the displacement (Y) of the confectionery pieces in each row are measured and that the lowering and carrying-along of the transverse rod (5) takes place in dependence on these measurement values.

3. Method according to claim 1 and 2, characterised thereby, that several transverse rods (5) are introduced individually one after the other into successive initial gaps (Z).

4. Device for the orientation of confectionery pieces (1), such as for example blocks or bars of chocolate, coming forward at irregular spacings, with a transverse rod (5), which is introducible into an initial gap (Z) from above a conveyor belt (2) and which is guided to be displaceable horizontally in conveying direction of the conveyor belt (2) and sits at a mounting (6), which is pivotable up and down, characterised thereby, that the mounting (6) together with the transverse rod (5) is arranged at an equipment (8) rotatable about an horizontal axis (9).

5. Device according to claim 4, characterised thereby, that the rotatable equipment displays turntables (8).

6. Device according to claim 4 and 5, characterised thereby, that several mountings with the respectively associated transverse rods (5) are arranged at the equipment (8).

7. Device according to claim 4 to 6, characterised thereby, that photo-cells (11) for the detection of the initial gaps (Z) of successive confectionery rows (1) and the displacement (Y) in the row are provided at the conveyor belt (2).

8. Device according to claim 4 to 7, characterised thereby, that electromechanical devices are provided for the upward and downward pivotation of the mountings (6) with the transverse rods (5).

9. Device according to claim 4 to 8, characterised thereby, that a computer is provided in conjunction with the photo-cells (11) for the driving of the electromechanical devices.

**Revendications**

1. Procédé destiné à l'alignement de sucreries (1) qui arrivent avec des intervalles irréguliers, comme par exemple des tablettes ou des barres de chocolat, sur une bande transporteuse (2), des tiges transversales (5) étant entraînées en même temps à une vitesse plus lente que la vitesse de la bande transporteuse, dans le sens de transport (3) de la bande transporteuse (2), chacune des tiges transversales (5) étant placée individuellement dans l'intervalle initial (Z) entre deux rangées successives de sucreries, et ne continuant à être entraînée en même temps à vitesse plus lente dans le sens de transport de la bande transporteuse (2) que jusqu'à ce que le décalage (Y) des sucreries (1) de la rangée soit éliminé et chaque tige transversale (5) étant accélérée par rapport à la bande transporteuse (2) puis soulevée et ramenée à un point de départ.

2. Procédé selon la revendication 1, caractérisé par le fait que l'écart entre les sucreries (1) dans la zone de l'intervalle initial (Z) et le décalage (Y) des sucreries sont mesurés dans chacune des rangées et que l'abaissement et l'entraînement concommittant de la tige transversale (5) s'effectuent en fonction de ces valeurs mesurées.

3. Procédé selon la revendication 1, caractérisé par le fait que plusieurs tiges transversales (5) sont mises en place individuellement l'une après l'autre dans des intervalles initiaux (Z) successifs.

4. Dispositif d'alignement de sucreries (1) qui arrivent avec des écarts irréguliers, comme par exemple des tablettes ou des barres de chocolat, comportant une tige transversale (5) qui est susceptible d'être introduite à partir d'un emplacement situé au-dessus d'une bande transporteuse (2) dans un intervalle initial (Z), qui est guidée de façon à pouvoir être déplacée horizontalement dans le sens de déplacement de la bande transporteuse (2) et qui est montée sur un support (6) susceptible d'être soulevé et abaissé, caractérisé par le fait que le support (6) est disposé ensemble avec la tige transversale (5) sur un dispositif (8) susceptible de tourner sur un axe horizontal (9).

5. Dispositif selon la revendication 4, caractérisé par le fait que le dispositif susceptible de tourner présente des disques tournants (8).

6. Dispositif selon les revendications 4 et 5, caractérisé par le fait que plusieurs supports comportant chacun leur tige transversale (5) associée sont mis en place sur le dispositif (8).

7. Dispositif selon les revendications 4 à 6, caractérisé par le fait que des cellules photoélectriques (11) sont prévues sur la bande transporteuse (2) en vue de détecter les intervalles initiaux (Z) des rangées successives (1) de sucreries ainsi que le décalage (Y) dans la rangée.

8. Dispositif selon les revendications 4 à 7, caractérisé par le fait qu'en vue du soulèvement et de l'abaissement des supports (6) comportant les tiges transversales (5) on prévoit des dispositifs électromécaniques.

9. Dispositif selon les revendications 4 à 8, caractérisé par le fait qu'en vue de la commande des dispositifs électromécaniques on prévoit un dispositif de calcul en liaison avec les cellules photoélectriques (11).

Fig. 1

Fig. 2

Fig. 3

EP 0 284 835 B1

Fig. 4